# EUROPEAN PATENT APPLICATION

(11) **EP 1 919 243 A1**
(43) Date of publication of application: **07.05.2008**
(21) Application number: 07021019.0
(22) Date of filing: 26.10.2007
(51) Int. Cl.: H04Q 7/38

(54) **Handover control system, handover control method, mobile communication system using the same, and base station used for the same**

(30) Priority: 01.11.2006 JP 2006297220
(71) Applicant: NEC Corporation, Minato-ku Tokyo (JP)
(72) Inventor: Takai, Kenichi, Minato-ku, Tokyo (JP)
(74) Representative: Glawe, Delfs, Moll

(57) **Abstract**

This invention provides a handover control system adapted to switch connection of a mobile station (2) from connection with a source base station (1-1) to connection with a target base station (1-2) as the mobile station (2) moves, wherein:
the mobile station (2) transmits a predetermined signal to at least the target base station (1-2) before a handover;
the target base station (1-2) reports a reception quality of the predetermined signal to the source base station (1-1); and
the source base station (1-1) compares a reception quality of a communication signal from the mobile station (2) with the reception quality of the predetermined signal reported from the target base station (1-2) to select a base station with the highest reception quality as a target base station candidate, and instructs the mobile station (2) to start the handover with the selected base station.

## Description

### INCORPORATION BY REFERENCE

This application is based upon and claims the benefit of priority from Japanese patent application No. 2006-297220 filed on November 1, 2006, the disclosure of which is incorporated herein in its entirety by reference.

### BACKGROUND OF THE INVENTION

### Field of the Invention

The present invention relates to handover control systems, handover control methods, mobile communication systems using the same, and base stations used for the same, and more particularly to a handover control scheme in a mobile communication system such as the CDMA (Code Division Multiple Access) system.

### Description of Related Art

In third generation mobile communication systems such as the CDMA system, placing too much importance on functionality and performance has caused complicated processing and an increase in system investment. In a next generation high-speed mobile communication system which is a successor system to the third generation, there are tendencies to simplify processing at base stations and make the entire system inexpensive and simple.

As one tendency in the next generation high-speed mobile communication system, only hard handover is likely to be supported. This will require establishment of a stable hard handover technique.

Mobile communication systems using the CDMA system represented by the third generation mobile communication systems have a characteristic that a mobile station can simultaneously communicate with a plurality of base stations. This characteristic brings advantages that the mobile station can move among the base stations without a momentary communication disconnection, and that relatively stable communications can be maintained even in an environment with a bad propagation condition.

Such a state where a mobile station communicates with a plurality of base stations while moving among the base stations is called "soft handover" or "diversity handover" (hereinafter collectively referred to as soft handover). In contrast, handover in which a mobile station only communicates with any one of base stations while moving among the base stations is called "hard handover".

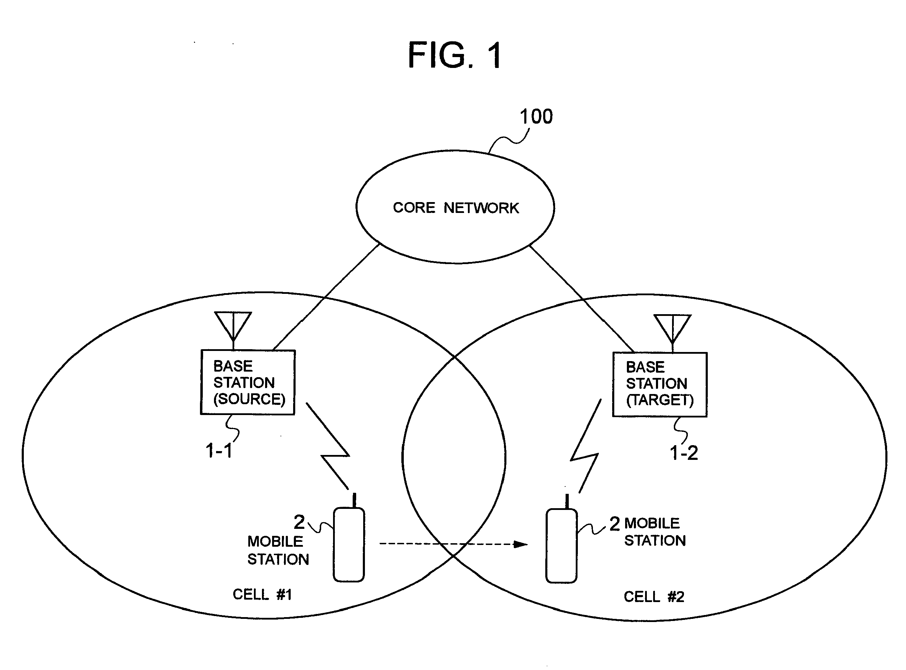

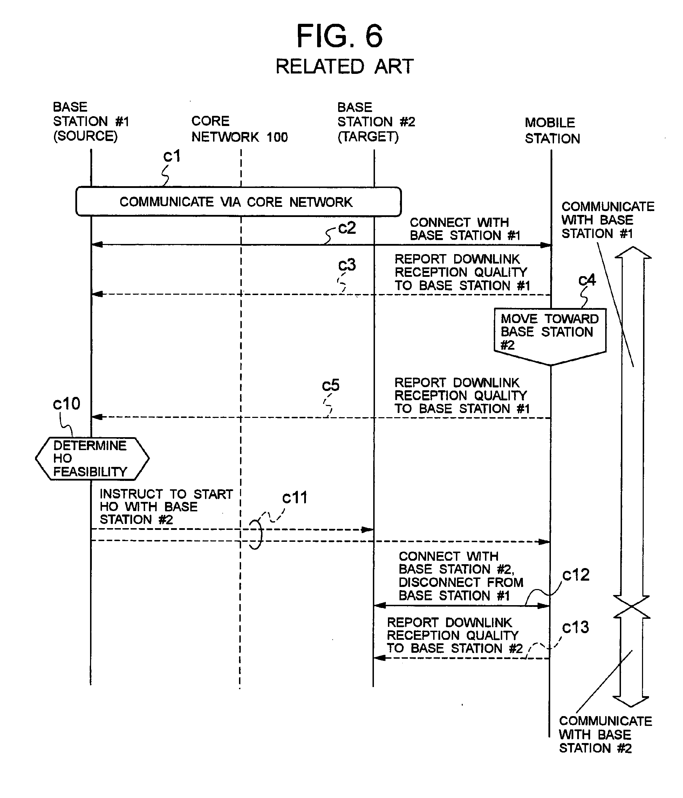

FIG. 6 shows exemplary handover (HO) operations in a mobile communication system according to a related art. With reference to FIG. 6, a sequence of connection operations in handover according to a technique of the related art will be described. The handover in this mobile communication system is performed, for example, when a mobile station 2 moves from a service area (cell #1) managed by a base station (#1) 1-1 to a service area (cell #2) managed by a base station (#2) as show in FIG. 1 (e.g., see Japanese Patent Laid-Open No. 2001-036953 (Patent Document 1)). These base stations 1-1 and 1-2 are connected to a core network 100.

With the base stations #1 and #2 communicating with each other via the core network (step c1 in FIG. 6) and the mobile station connecting with the base station #1 in the cell #1 (step c2 in FIG. 6), the mobile station reports the downlink (base station → mobile station) communication quality for each base station around it to the base station #1 while communicating with the base station #1 (step c3 in FIG. 6).

Considering that the mobile station then moves from the cell #1 toward the cell #2 (step c4 in FIG. 6), the mobile station reports, to the source base station #1, the reception quality of a signal from each of the base stations #1 and #2 (step c5 in FIG. 6).

Based on the "downlink reception qualities" reported from the mobile station, the source base station #1 determines HO feasibility (step c10 in FIG. 6). The mobile station is measuring the reception quality of the downlink signal (typically a signal unique to each base station, called a pilot channel) from each of the base stations (base stations #1 and #2) and reporting the reception quality to the source base station (here, the base station #1).

The source base station #1 compares the reception qualities reported from the mobile station and selects a base station determined to have the highest quality in the HO feasibility determination as a target base station. If the source base station #1 determines that the quality for the base station #2 is higher than that for the base station #1, the source base station #1 transmits an HO start instruction to the base station #2 and the mobile station (step c11 in FIG. 6).

Upon reception of the HO start instruction from the source base station #1, the mobile station performs handover to the base station #2 and disconnects the communication with the base station #1 (step c12 in FIG. 6). After that, the downlink reception quality for each base station is reported to the target base station #2 (step c13 in FIG. 6).

While the hard handover described above has an advantage that processing is simple compared to the soft handover, it has a disadvantage that the communication is momentarily disconnected, or the communication may be aborted (discontinued) at the worst if each execution timing of processes or decision of the target base station is misjudged.

### SUMMARY

An exemplary object of the invention is to provide a handover control system, a handover control method, a mobile communication system using the same, and a base station used for the same that are capable of alleviating problems related to the connection stability in the hard handover of a mobile station.

A system of an exemplary aspect of the invention is a handover control system adapted to switch connection of a mobile station from connection with a source base station to connection with a target base station as the mobile station moves, wherein: the mobile station transmits a predetermined signal to at least the target base station before a handover; the target base station reports a reception quality of the predetermined signal to the source base station; and the source base station compares a reception quality of a communication signal from the mobile station with the reception quality of the predetermined signal reported from the target base station to select a base station with the highest reception quality as a target base station candidate, and instructs the mobile station to start the handover with the selected base station.

A method of an exemplary aspect of the invention is a handover control method adapted to switch connection of a mobile station from connection with a source base station to connection with a target base station as the mobile station moves, including: in the mobile station, transmitting a predetermined signal to at least the target base station before the handover; in the target base station, reporting a reception quality of the predetermined signal to the source base station; and in the source base station, comparing a reception quality of a communication signal from the mobile station with the reception quality of the predetermined signal reported from the target base station to select a base station with the highest reception quality as a target base station candidate, and instructing the mobile station to start the handover with the selected base station.

A base station of an exemplary aspect of the invention is a source base station in a handover control system adapted to switch connection of a mobile station from connection with the source base station to connection with a target base station as the mobile station moves, wherein the source base station: compares a reception quality of a predetermined signal reported from the target base station with a reception quality of a communication signal from the mobile station to select a base station with the highest reception quality as a target base station candidate, the reception quality of the predetermined signal being reported when the mobile station transmits the predetermined signal to at least the target base station before the handover; and instructs the mobile station to start the handover with the selected base station.

### BRIEF DESCRIPTION OF THE DRAWINGS

FIG. 1 is a block diagram showing the configuration of a mobile communication system according to an exemplary embodiment of the present invention;
FIG. 2 is a block diagram showing an exemplary configuration of base stations in FIG. 1;
FIG. 3 is a sequence chart showing the flow of connection operations among the base stations and a mobile station where a handover method according to the exemplary embodiment of the present invention is used;
FIG. 4 is a sequence chart showing the flow of connection operations among the base stations and the mobile station where a handover method according to another exemplary embodiment of the present invention is used;
FIG. 5 is a diagram showing the number of repetitions of access channel transmission and how many times the signal has been transmitted for successful reception according to the other exemplary embodiment of the present invention; and
FIG. 6 is a sequence chart showing the flow of connection operations among the base stations and the mobile station where a handover method according to a related art is used.

### DETAILED DESCRIPTION OF THE EXEMPLARY EMBODIMENTS

Now, exemplary embodiments of the invention will be described with reference to the drawings.

### [First Exemplary Embodiment]

FIG. 1 is a block diagram showing the configuration of a mobile communication system according to an exemplary embodiment of the present invention. In FIG. 1, the mobile communication system according to the embodiment of the present invention includes a base station (#1) 1-1 and a base station (#2) 1-2, each connected to a core network 100, and a mobile station 2.

The base station (#1) 1-1 and the base station (#2) 1-2 are connected with each other via the core network 100. The area in which the base station (#1) 1-1 can communicate with the mobile station 2 is represented as a cell #1, and the area in which the base station (#2) 1-2 can communicate with the mobile station 2 is represented as a cell #2. The mobile station 2 is shown to perform handover from the base station (#1) 1-1 to the base station (#2) 1-2 while moving from the cell #1 toward the cell #2. For simplicity, FIG. 1 illustrates the handover between the two base stations (#1) 1-1 and (#2) 1-2. However, this is also applicable to the case where more than two base stations are involved, with the basic processing operations being the same.

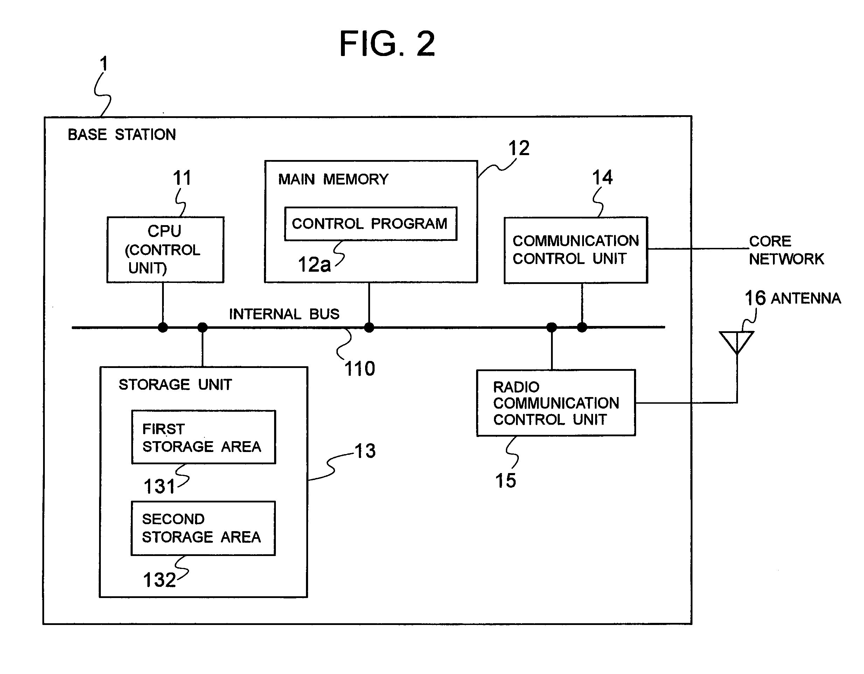

FIG. 2 is a block diagram showing an exemplary configuration of the base stations (#1) 1-1 and (#2) 1-2 in FIG. 1. In FIG. 2, the base stations (#1) 1-1 and (#2) 1-2 are represented as a base station 1 because they have the same configuration.

The base station 1 includes a CPU (Central Processing Unit) 11 functioning as a control unit, a main memory 12 storing a control program 12a executed by the CPU 11, a storage unit 13 used as a working area when the CPU 11 executes the control program 12a, a communication control unit 14 controlling communications with other base stations, a radio communication control unit 15 and an antenna 16 controlling radio communications with the mobile station 2, and an internal bus 110 to which the CPU 11, the main memory 12, the storage unit 13, the communication control unit 14, and the radio communication control unit 15 are connected.

The storage unit 13 includes a first storage area 131 and a second storage area 132. The first storage area 131 stores information on the reception quality between the HO (handover) source, i.e., the source base station (#1) 1-1 and the mobile station 2. The second storage area 132 stores information on the reception quality between the HO target, i.e., the target base station (#2) 1-2 and the mobile station 2.

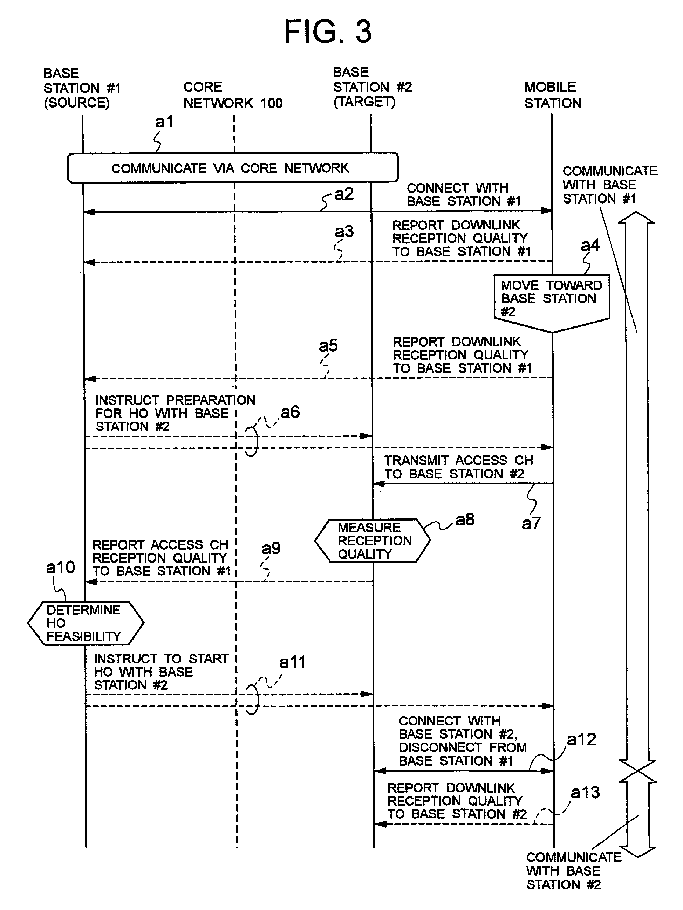

FIG. 3 is a sequence chart showing the flow of connection operations among the base stations (#1) 1-1 and (#2) 1-2 and the mobile station 2 where a handover method according to the embodiment of the present invention is used. With reference to FIGS. 1 to 3, the handover method according to the embodiment of the present invention will be described.

The base station (#1) 1-1 and the base station (#2) 1-2 are considered as the source base station and the target base station respectively, and the mobile station 2 is assumed to move within the service area (cell #1 or #2) of the base station (#1) 1-1 or the base station (#2) 1-2. The processing operations of the base station (#1) 1-1 in FIG. 3 is implemented by the CPU 11 executing the control program 12a.

With the base stations (#1) 1-1 and (#2) 1-2 communicating with each other via the core network 100 (step a1 in FIG. 3) and the mobile station 2 connecting with the base station (#1) 1-1 in the cell #1 (step a2 in FIG. 3), the mobile station 2 reports the downlink (base station → mobile station) communication quality for each base station around it to the base station (#1) 1-1 while communicating with the base station (#1) 1-1 (step a3 in FIG. 3).

Then, when the mobile station 2 moves from the cell #1 toward the cell #2 (step a4 in FIG. 3), the mobile station 2 reports, to the source base station (#1) 1-1, the reception quality of a signal from each of the base stations (#1) 1-1 and (#2) 1-2 (step a5 in FIG. 3).

Based on the reported qualities, the base station (#1) 1-1 determines whether the base station (#2) 1-2 is capable of handover. If the base station (#1) 1-1 determines that the new base station, i.e., the base station (#2) 1-2 can be a candidate for performing the handover, the base station (#1) 1-1 gives an HO preparation instruction to the base station (#2) 1-2 and the mobile station 2 (step a6 in FIG. 3).

Upon reception of the HO preparation instruction, the mobile station 2 transmits a predetermined signal to the base station (#2) 1-2 (step a7 in FIG. 3). The base station (#2) 1-2 measures the reception quality of this signal (step a8 in FIG. 3) and reports the measurement result to the base station (#1) 1-1 (step a9 in FIG. 3). The predetermined signal is used here because synchronization has not been established yet between the base station (#2) 1-2 and the mobile station 2 at this stage. For example, a signal like an access channel (access CH) used by a mobile station in connecting to a base station for the first time may be suitable as the predetermined signal.

Upon reception of the report of the measurement result from the base station (#2) 1-2, the base station (#1) 1-1 compares the reported reception quality from the base station (#2) 1-2 and the communication quality between itself and the mobile station 2. The base station (#1) 1-1 determines HO feasibility by determining which base station has a higher communication quality (step a10 in FIG. 3). Here, the base station (#1) 1-1 has stored the measurement result from the base station (#2) 1-2 in the second storage area 132 of the storage unit 13, and the communication quality between itself and the mobile station 2 in the first storage area 131.

If the base station (#1) 1-1 has a higher quality, the base station (#1) 1-1 continues its communication with the mobile station 2. However, if the base station (#1) 1-1 determines that the base station (#2) 1-2 has a higher quality, the base station (#1) 1-1 transmits an HO start instruction to the base station (#2) 1-2 and the mobile station 2 (step a11 in FIG. 3).

In response to the HO start instruction from the base station (#1) 1-1, the mobile station 2 performs the handover to the base station (#2) 1-2 and disconnects the communication with the base station (#1) 1-1 (step a12 in FIG. 3). After that, the downlink reception quality for each base station is reported to the target base station (#2) 1-2 (step a13 in FIG. 3).

In this embodiment, before the handover, the mobile station transmits a predetermined signal to the target base station, which then measures the reception quality of the signal from the mobile station and reports the reception quality to the source base station. The source base station compares the reception quality reported from the target base station and the reception quality of a communication signal received at the source base station from the mobile station. The source base station selects a base station with the highest reception quality as a target base station candidate and generates, for the mobile station, a handover instruction targeted on the selected base station.

In this manner, the uplink reception quality at the target base station can be measured in advance. This prevents the communication disconnection or communication quality degradation due to the handover and allows a stable communication quality to be maintained even in a communication system supporting only the hard handover.

### [Second Exemplary Embodiment]

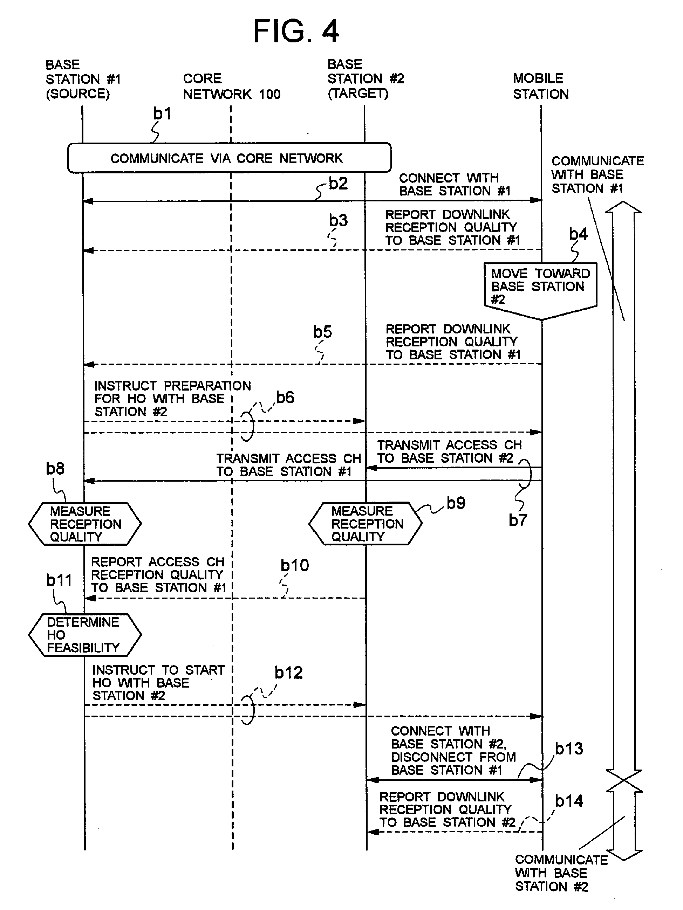

FIG. 4 is a sequence chart showing the flow of connection operations among the base stations (#1) and (#2) and the mobile station 2 where a handover method according to a second exemplary embodiment of the present invention is used. The mobile communication system and the base stations according to this embodiment of the present invention has the same configuration as in the first embodiment of the present invention shown in FIGS. 1 and 2. However, this embodiment differs from the first embodiment of the present invention in that a modification is made to the information used in the HO feasibility determination such that the access CH reception quality is used for both the base stations (#1) and (#2).

With reference to FIGS. 1, 2, and 4, the handover method according to the second embodiment of the present invention will be described. The base station (#1) 1-1 and the base station (#2) 1-2 are considered as the source base station and the target base station respectively, and the mobile station 2 is assumed to move within the service area (cell #1 or #2) of the base station (#1) 1-1 or the base station (#2) 1-2. The processing operations of the base station (#1) 1-1 in FIG. 4 is implemented by the CPU 11 executing the control program 12a.

With the base stations (#1) 1-1 and (#2) 1-2 communicating with each other via the core network 100 (step b1 in FIG. 4) and the mobile station 2 connecting with the base station (#1) 1-1 in the cell #1 (step b2 in FIG. 4), the mobile station 2 reports the downlink (base station → mobile station) communication quality for each base station around it to the base station (#1) 1-1 while communicating with the base station (#1) 1-1 (step b3 in FIG. 4).

Then, as the mobile station 2 moves from the cell #1 toward the cell #2 (step b4 in FIG. 4), the mobile station 2 reports, to the source base station (#1) 1-1, the reception quality of a signal from each of the base stations (#1) 1-1 and (#2) 1-2 (step b5 in FIG. 4).

Based on the reported qualities, the base station (#1) 1-1 determines whether the base station (#2) 1-2 is capable of handover. If the base station (#1) 1-1 determines that the new base station, i.e., the base station (#2) 1-2 can be a candidate for performing the handover, the base station (#1) 1-1 gives an HO preparation instruction to the base station (#2) 1-2 and the mobile station 2 (step b6 in FIG. 4).

Upon reception of the HO preparation instruction, the mobile station 2 transmits a predetermined signal (e.g., the access CH) to the base station (#1) 1-1 and the base station (#2) 1-2 (step b7 in FIG. 4).

Each of the base station (#1) 1-1 and the base station (#2) 1-2 measures the reception quality of the signal from the mobile station 2 (steps b8 and b9 in FIG. 4). The base station (#2) 1-2 reports the measurement result to the base station (#1) 1-1 (step b10 in FIG. 4).

Upon reception of the report of the measurement result from the base station (#2) 1-2, the base station (#1) 1-1 compares the reception qualities of the signal (e.g., the access CH) for the base station (#1) 1-1 and the base station (#2) 1-2. The base station (#1) 1-1 determines HO feasibility by determining which base station has a higher communication quality (step b11 in FIG. 4). Here, the base station (#1) 1-1 has stored the measurement result from the base station (#2) 1-2 in the second storage area 132 of the storage unit 13, and its own measurement result in the first storage area 131.

If the base station (#1) 1-1 has a higher quality, the base station (#1) 1-1 continues its communication with the mobile station 2. However, if the base station (#1) 1-1 determines that the base station (#2) 1-2 has a higher quality than itself, the base station (#1) 1-1 transmits an HO start instruction to the base station (#2) 1-2 and the mobile station 2 (step b12 in FIG. 4).

In response to the HO start instruction from the base station (#1) 1-1, the mobile station 2 performs the handover to the base station (#2) 1-2 and disconnects the communication with the base station (#1) 1-1 (step b13 in FIG. 4). After that, the downlink reception quality for each base station is reported to the target base station (#2) 1-2 (step b14 in FIG. 4).

If, in the reception quality measurement in steps b8 and b9, a signal like the access CH with which the mobile station 2 attempts to connect to a base station for the first time is used as the transmitted signal from the mobile station 2, the measurement result report at step b10 and the HO feasibility determination at step b11 may be simplified in the following manner.

When the access CH is used, the mobile station 2 repeats transmitting the same signal with gradually increased transmission power until a response is obtained from the base stations. The number of repetitions is embedded in the signal, so that the base station can know, when successfully receiving the signal, how many times the signal has been repeatedly transmitted for the successful reception. Instead of the reception quality, how many times the signal has been repeatedly transmitted for the first reception is reported for each of the base station (#1) 1-1 and the base station (#2) 1-2 to be compared in the source base station. The source base station can determine which base station has a higher quality based on which base station was able to receive the signal with a smaller number of repetitions (with lower transmission power).

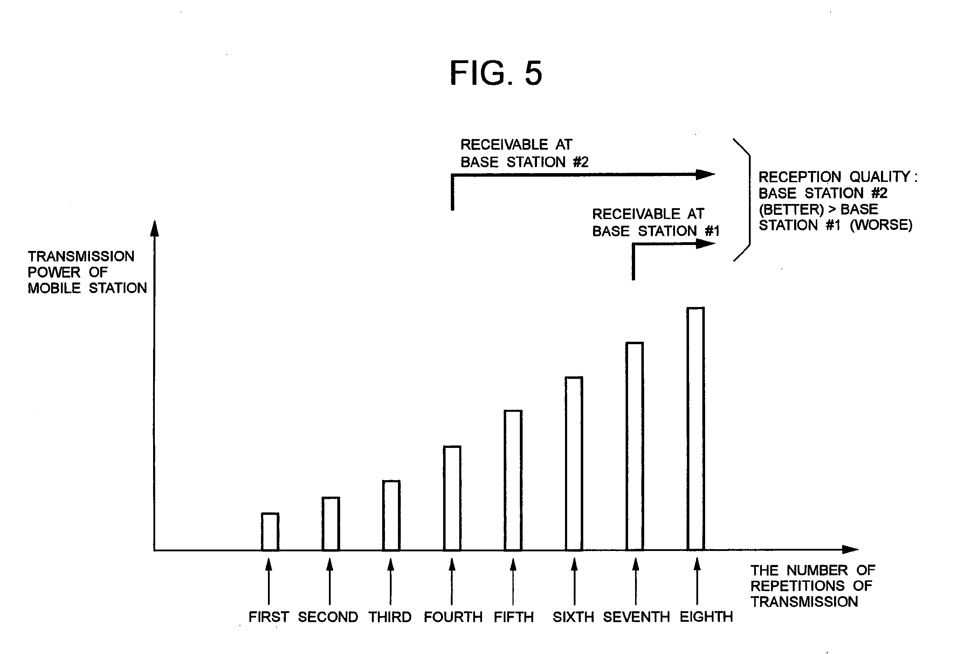

This is shown in FIG. 5. As shown in FIG. 5, the mobile station 2 repeatedly transmits the access CH to each of the base stations (#1) 1-1 and (#2) 1-2 with gradually increased transmission power until a response is obtained from the base stations (#1) 1-1 and (#2) 1-2.

In the case of FIG. 5, the base station (#2) 1-2 can receive the access CH in the fourth transmission from the mobile station 2, whereas the base station (#1) 1-1 can receive the access CH in the seventh transmission. Since the base station (#2) 1-2 is capable of communication with less power than the base station (#1) 1-1, it can be determined that the base station (#2) 1-2 is in an environment with a higher communication quality.

Thus, in this embodiment, the source base station (#1) 1-1 can select the target base station (#2) 1-2 by comparing the number of repetitions of access CH transmission and how many times the signal has been transmitted for successful reception. Therefore, this embodiment also prevents the communication disconnection or communication quality degradation due to the handover and allows a stable communication quality to be maintained even in a communication system supporting only hard handover.

An exemplary advantage according to the invention is that the connection stability in the hard handover of a mobile station can be improved.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

## Claims

1. A handover control system adapted to switch connection of a mobile station from connection with a source base station to connection with a target base station as the mobile station moves, wherein:
the mobile station transmits a predetermined signal to at least the target base station before a handover;
the target base station reports a reception quality of the predetermined signal to the source base station; and
the source base station compares a reception quality of a communication signal from the mobile station with the reception quality of the predetermined signal reported from the target base station to select a base station with the highest reception quality as a target base station candidate, and instructs the mobile station to start the handover with the selected base station.

2. The handover control system according to claim 1, wherein:
the mobile station transmits the predetermined signal to both the source base station and the target base station; and
the source base station uses a reception quality of the predetermined signal instead of the reception quality of the communication signal from the mobile station.

3. The handover control system according to claim 1 or 2, wherein the predetermined signal is a signal of an access channel used by the mobile station in connecting to a base station for the first time.

4. The handover control system according to claim 2, wherein:
the mobile station repeatedly transmits the predetermined signal with gradually increased power along with information indicating the number of repetitions of transmission;
the target base station reports, to the source base station, information indicating the number of repetitions of transmission at the time of successful first reception of the predetermined signal; and
the source base station compares the number of repetitions of transmission at the time of successful first reception of the predetermined signal at the source base station with the number of repetitions of transmission reported from the target base station to select a base station with a smaller number of repetitions of transmission as a target base station candidate.

5. The handover control system according to any of claims 1 to 4, wherein:
the source base station determines a base station capable of the handover based on a downlink reception quality notified of from the mobile station and transmits an instruction to prepare for the handover to the determined base station and the mobile station; and
the mobile station transmits the predetermined signal in response to the instruction to prepare for the handover.

6. A mobile communication system using the handover control system according to any of claims 1 to 5.

7. A handover control method adapted to switch connection of a mobile station from connection with a source base station to connection with a target base station as the mobile station moves, comprising:
in the mobile station, transmitting a predetermined signal to at least the target base station before the handover;
in the target base station, reporting a reception quality of the predetermined signal to the source base station; and
in the source base station, comparing a reception quality of a communication signal from the mobile station with the reception quality of the predetermined signal reported from the target base station to select a base station with the highest reception quality as a target base station candidate, and instructing the mobile station to start the handover with the selected base station.

8. The handover control method according to claim 7, wherein:
the mobile station transmits the predetermined signal to both the source base station and the target base station; and
the source base station uses a reception quality of the predetermined signal instead of the reception quality of the communication signal from the mobile station.

9. The handover control method according to claim 7 or 8, wherein the predetermined signal is a signal of an access channel used by the mobile station in connecting to a base station for the first time.

10. The handover control method according to claim 8, further comprising:
in the mobile station, repeatedly transmitting the predetermined signal with gradually increased power along with information indicating the number of repetitions of transmission;
in the target base station, reporting, to the source base station, information indicating the number of repetitions of transmission at the time of successful first reception of the predetermined signal; and
in the source base station, comparing the number of repetitions of transmission at the time of successful first reception of the predetermined signal at the source base station with the number of repetitions of transmission reported from the target base station to select a base station with a smaller number of repetitions of transmission as a target base station candidate.

11. The handover control method according to any of claims 7 to 10, further comprising:
in the source base station, determining a base station capable of the handover based on a downlink reception quality notified of from the mobile station and transmitting an instruction to prepare for the handover to the determined base station and the mobile station; and
in the mobile station, transmitting the predetermined signal in response to the instruction to prepare for the handover.

12. A source base station in a handover control system adapted to switch connection of a mobile station from connection with the source base station to connection with a target base station as the mobile station moves, wherein the source base station:
compares a reception quality of a predetermined signal reported from the target base station with a reception quality of a communication signal from the mobile station to select a base station with the highest reception quality as a target base station candidate, the reception quality of the predetermined signal being reported when the mobile station transmits the predetermined signal to at least the target base station before the handover; and
instructs the mobile station to start the handover with the selected base station.

13. The base station according to claim 12, wherein:
the predetermined signal is transmitted from the mobile station to both the source base station and the target base station; and
the source base station uses a reception quality of the predetermined signal instead of the reception quality of the communication signal from the mobile station.

14. The base station according to claim 12 or 13, wherein the predetermined signal is a signal of an access channel used by the mobile station in connecting to a base station for the first time.

15. The base station according to claim 13, wherein:
the predetermined signal is repeatedly transmitted with gradually increased power along with information indicating the number of repetitions of transmission; and
the source base station compares the number of repetitions of transmission at the time of successful first reception of the predetermined signal reported from the target base station with the number of repetitions of transmission at the time of successful first reception of the predetermined signal at the source base station to select a base station with a smaller number of repetitions of transmission as a target base station candidate.

16. The base station according to any of claims 12 to 15, wherein:
the source base station determines a base station capable of the handover based on a downlink reception quality notified of from the mobile station and transmits an instruction to prepare for the handover to the determined base station and the mobile station; and
the mobile station transmits the predetermined signal in response to the instruction to prepare for the handover.
